# EUROPÄISCHE PATENTANMELDUNG

(11) **EP 0 675 497 A2**
(43) Veröffentlichungstag der Anmeldung: **04.10.1995**
(21) Anmeldenummer: 95104258.9
(22) Anmeldetag: 23.03.1995
(51) Int. Cl.: G11B 33/04

(54) **Vorrichtung zum Aufbewahren von Signalträgern**

(30) Priorität: 28.03.1994 CH 926/94
(71) Anmelder: Steffen, Alfred, CH-6113 Romoos (CH)
(72) Erfinder: Steffen, Alfred, CH-6113 Romoos (CH)
(74) Vertreter: Kemény AG Patentanwaltbüro

(57) **Zusammenfassung**

Zum Aufbewahren von Signalträgern (CD), wie DC-Tonträgern dienen schwenkbare Aufbewahrungselemente (3). Jedes schwenkbare Aufbewahrungselement (3) hat ein Scharnierteil (6), das an seinen beiden sich gegenüberliegenden Seiten zur Aufnahme je einer Schwenkachse eingerichtet ist. Dabei ist es mittels einer ersten Schwenkachse mit einem ihm als Stütze dienenden Basiselement (2) verbunden, während es mittels einer zweiten Schwenkachse mit einem gleichartigen Aufbewahrungselement (3) verbunden oder verbindbar ist.

## Beschreibung

Die Erfindung betrifft eine Vorrichtung zum Aufbewahren von Signalträgern nach dem Oberbegriff des Anspruch 1

Signalträger sind beispielsweise Disketten und CD. Landläufig werden vor allem Ton- und Bildträger, wie CD, Audio- und Videokassetten, Schall - und Bildplatten und dergleichen benutzt.

Tonträger werden in der Regel in einer den Inhalt beschreibenden und/oder abbildenden Verpackung angeboten und häufig in dieser Verpackung aufbewahrt. Bei den bekannten schwenkbaren Vorrichtungen hat man nur schwer einen ausreichenden Ueberblick über das Angebot. Selbst bei entsprechend aufgeschwenkter Vorrichtung sieht man nur einen geringen Teil der Verpackung und der darauf angebrachten Inhaltsbeschreibung. Man muss den verpackten Tonträger aus der Vorrichtung herausnehmen, wenn man mehr als nur ein (oft nicht genügend aussagendes) Stichwort sehen will.

Der Erfindung liegt die Aufgabe Zugrunde, einen ausreichenden Teil des Inhalts der in der Aufbewahrungs-Vorrichtung enthaltenen Signalträger, insbesondere Tonträger ohne Entnahme aus der Vorrichtung sichtbar zu machen.

Zur Lösung dieser Aufgabe wird die im Anspruch 1 gekennzeichnete Vorrichtung vorgeschlagen.

Bei der erfindungsgemässen Vorrichtung hat jedes schwenkbare Aufbewahrungselement ein Scharnierteil , welches an seinen beiden sich gegenüberliegenden Seiten zur Aufnahme je einer Schwenkachse eingerichtet ist. Es ist mittels einer ersten Schwenkachse mit einem ihm als Stütze dienenden Element verbunden. Mittels einer zweiten Schwenkachse ist es oder kann es mit einem nachfolgenden gleichartigen Aufbewahrungselement verbunden sein.

Dabei ist es vorzugsweise möglich, ein mit einem Bauteil (z.B. einer Wand oder einem genügend stabilen Möbel) verbindbares Basiselement vorzusehen, an welchem das erste schwenkbare Aufbewahrungselement schwenkbar angeschlagen werden kann.

Das Basiselement kann bevorzugterweise selbst als ein Aufbewahrungselement ausgebildet sein, das (beispielsweise am der Wand befestigt) einem oder mehreren schwenkbaren Aufbewahrungselementen als Lagerstelle dienen kann.

Das Basiselement kann in einer anderen bevorzugten Ausführungsform eine Stange sein, die man zwischen zwei Bauteilen (z.B. zwischen Boden und Decke) einspannen kann. Das hat den besonderen Vorteil geringen Platzbedarfs und des Vermeidens von Bauschäden durch Befestigungsmittel.

Man kann also nicht nur an einer Stelle einer Vorrichtung einsehen, weil man auch hinter einem aufgeschwenkten Element weiter aufschwenken kann.

Weil man im "Blättern" in der Vorrichtung grosse Freiheit hat, kann man den einzelnen Signalträgern mehr Platz als bisher zumessen, so dass man beispielsweise das ganze Inhaltsverzeichnis einer CD-Packung frei sichtbar machen kann.

Sehr vorteilhaft ist es, wenn jedes Aufbewahrungselement U-förmige Leisten hat, in die man von oben Signalträger einsetzen kann, weil man dann die Signalträger durch einfaches Anheben und seitliches Ausfahren auch wieder herauszunehmen vermag.

Auch sehr vorteilhaft ist es, wenn die Leisten wenigstens teilweise durch eine Trennwand in zwei Aufbewahrungsbereiche aufgeteilt sind. Diese Trennwand kann aussteifend wirken. In die ungeteilte Leiste kann man dann in der Breite eine Mehrfachpackung, insbesondere eine Doppelpackung einsetzen. Beidseits der Trennwand kann man einzelne Signal träger anordnen, so dass sie ohne gegenseitige Beeinträchtigung einsetzbar und herausnehmbar sind.

Es wurde somit dargelegt, dass die erfindungsgemässe Vorrichtung eine einfache und sehr übersichtliche Aufbewahrung von Signalträgern ermöglicht und dabei trotzdem platzsparend und preiswert ausführbar ist.

Die Erfindung wird in zwei Ausführungsformen der Vorrichtung nachstehend anhand der Zeichnung beispielsweise besprochen. Es zeigen:
- Fig. 1: eine Ansicht einer ersten Ausführungsform der Vorrichtung mit einem Basiselement an welchem rechts und links Aufbewahrungselemente schwenkbar gelagert sind, wobei rechts hier nur ein um 180 Winkelgrad aufgeklapptes und links ein um 90 Winkelgrad aufgeklapptes und vertikal geschnittenes schwenkbares Aufbewahrungselement gezeichnet ist,
- Fig. 2: eine Draufsicht auf die in Fig. 1 gezeigte Ausführungsform mit je vier schwenkbaren Aufbewahrungselementen zu beiden Seiten des Basiselements,
- Fig. 3: eine Draufsicht auf eine zweite Ausführungsform der Vorrichtung, bei welcher das Basiselement eine zwischen Boden und Decke eingespannte Stange ist,
- Fig. 4: eine gegenüber Fig. 2 und 3 vergrösserte Draufsicht auf zwei miteinander schwenkbar verbundene Elemente in fragmentarer Darstellung,
- Fig. 5: eine Ansicht der durch eine Scharnierachse verbundenen Scharnierteile nach Pfeil V in Fig. 4,
und
- Fig. 6: die zerlegten Teile aus Fig. 5.

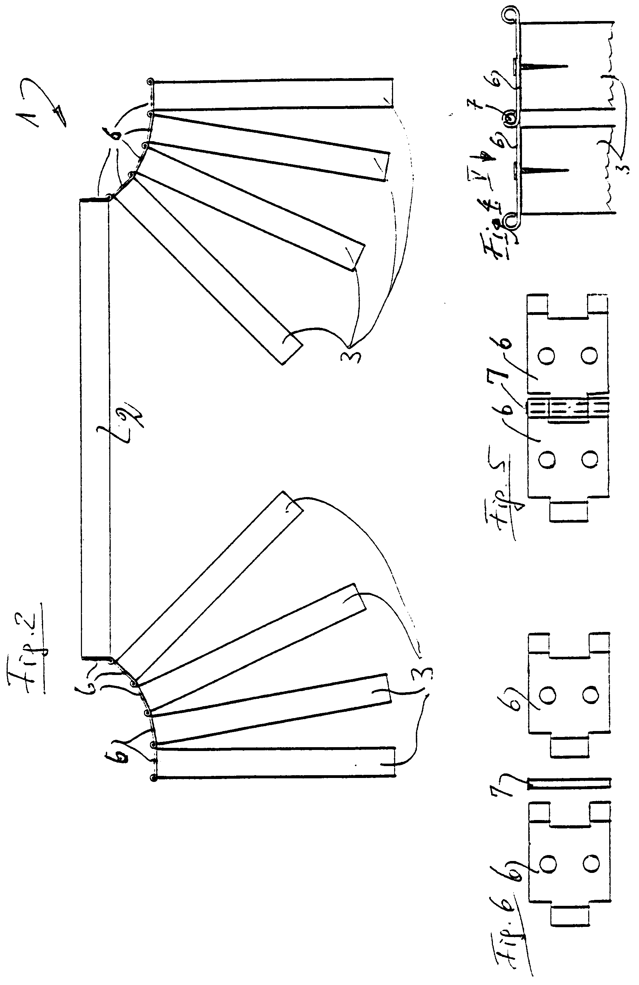

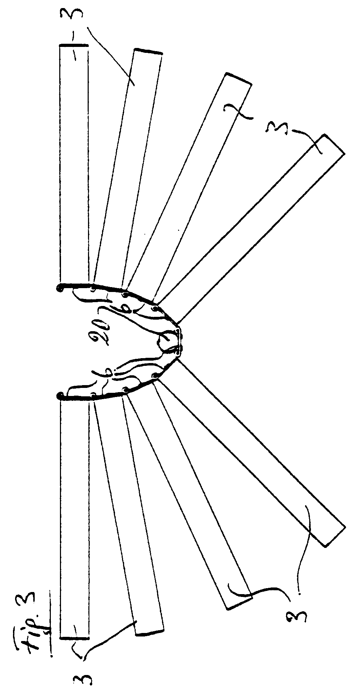

In der Zeichnung bedeuten:
- 1: Die Vorrichtung der ersten Ausführungsform.
- 10: Die Vorrichtung der zweiten Ausführungsform.
- 2: Basiselement von 2.
- 20: Basiselement von 10.
- 3: Aufbewahrungselemente, schwenkbar an 2 bzw. aneinander.
- 4: Leisten, U-förmig.
- 5: Trennwände.
- 6: Scharnierteile.
- 7: Scharnierachsen /nur in Fig. 4, 5 und 6.
- CD: CD-Packungen.

In der ersten Ausführungsform der Vorrichtung 1 ist das Basiselement 2 als eine Art Schrank ausgebildet, das genauso, wie die an ihm und aneinander schwenkbar angebrachten Aufbewahrungselemente 3 mit Leisten 4 ausgestattet ist. Die Elemente 2 und 3 sind durch Scharnierteile 6 und Scharnierachsen 7 in der gezeichneten Weise verbunden. Auch die Elemente 3 sind untereinander mit Scharnierteilen 6 und Scharnierachsen 7 verbunden. Es können Elemente hinzugefügt und weggelassen werden.

Anstelle des Basiselementes 1 tritt in der zweiten Ausführungsform der Vorrichtung 10 die Stange 20, an welcher die zwei ersten Aufbewahrungselemente 3 mit den Scharnierteilen 6 und mit den Scharnierachsen 7 angebracht sind. Dann ist jedes weitere Aufbewahrungselement in analoger Weise am davorliegenden angebracht. Auch hier können Elemente hinzugefügt oder weggelassen werden.

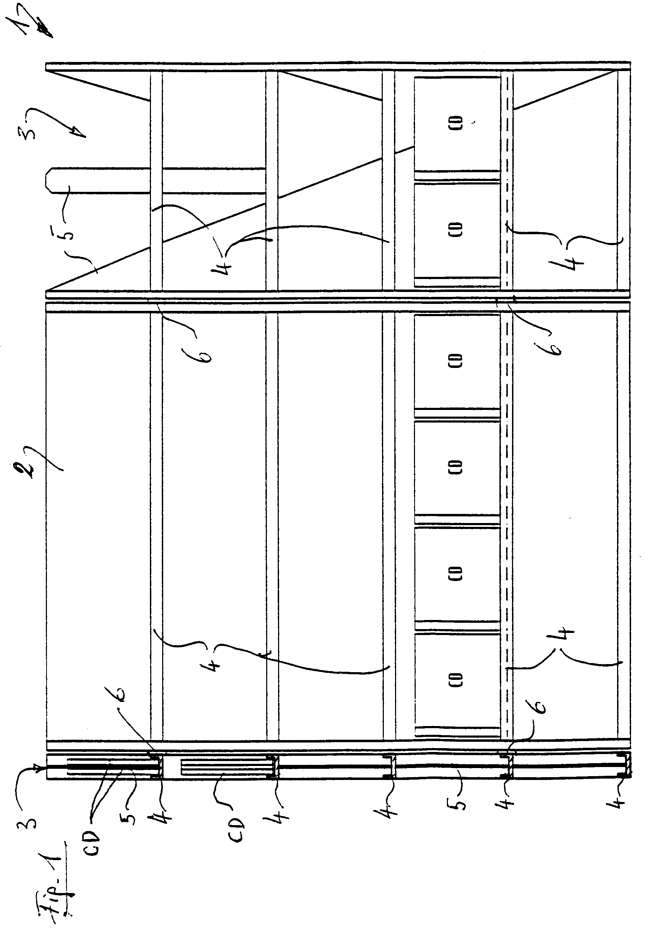

In beiden Ausführungsformen haben die Elemente U-förmige Leisten 3, in denen gemäss Fig. 1 CD eingesteckt werden können. Die CD können durch Anheben aus den Leisten gehoben und bequen seitlich entnommen werden.

Wie schon früher dargelegt, ermöglicht die erfindungsgemässe Vorrichtung eine einfache und sehr übersichtliche Aufbewahrung von Signalträgern und ist dabei trotzdem platzsparend und preiswert ausführbar.

## Patentansprüche

1. Vorrichtung zum Aufbewahren von Signalträgern, mit wenigstens einem um eine Schwenkachse schwenkbaren Aufbewahrungselement, dadurch gekennzeichnet, dass
jedes schwenkbare Aufbewahrungselement (3) mittels eines an seinen beiden sich gegenüberliegenden Seiten zur Aufnahme je einer Schwenkachse (7) eingerichteten Scharnierteils (6) versehen ist,
dergestalt, dass es mittels einer ersten Schwenkachse (7) mit einem ihm als Stütze dienenden Basiselement (2; 20) verbunden ist, während es mittels einer zweiten Schwenkachse (7) mit einem nachfolgenden gleichartigen Aufbewahrungselement (3) verbunden oder verbindbar ist.

2. Vorrichtung nach Anspruch 1 , dadurch gekennzeichnet, dass ein mit einem Bauteil verbindbares Basiselement (2;20) vorgesehen ist.

3. Vorrichtung nach Anspruch 2 dadurch gekennzeichnet, dass das Basiselement (2), aufbewahrungselementartig ausgebildet ist.

4. Vorrichtung nach Anspruch 2, dadurch gekennzeichnet, dass ein zwischen zwei Bauteile einspannbares Basiselement (20) vorgesehen ist.

5. Vorrichtung nach einem der Ansprüche 1 bis 4, dadurch gekennzeichnet, dass jedes Aufbewahrungselement (3) U-förmige Leisten (4) zur Aufname der Signalträger (CD) aufweist.

6. Vorrichtung nach Anspruch 5, dadurch gekennzeichnet, dass die Leisten (4) wenigstens teilweise durch eine Trennwand (5) aufgeteilt sind.

7. Vorrichtung nach Anspruch 6, dadurch gekennzeichnet, dass die ungeteilte Leiste (4) in der Breite einer Mehrzahl von Signaltägern (CD) , vorzugsweise einer Doppelpackung, Platz bietet.

8. Vorrichtung nach Anspruch 6, dadurch gekennzeichnet, dass beidseits der Trennwand (5) Signalträger (CD), vorzugsweise Einfachpackungen, Platz finden.
